# EUROPEAN PATENT APPLICATION

(11) **EP 1 592 115 A2**
(43) Date of publication of application: **02.11.2005**
(21) Application number: 05103285.2
(22) Date of filing: 22.04.2005
(51) Int. Cl.: H02M 1/12, H02M 7/217

(54) **A NEW ARCHITECTURE OF POWER SUPPLY SYSTEM FOR LCD APPARATUS**

(30) Priority: 26.04.2004 CN 200410043434
(71) Applicant: Delta Electronics, Inc., Taoyuan Sien 333, Taiwan (CN)
(72) Inventor: Ying, Jianping, 320, Taoyuan Shien (TW); Sun, Chaoqun, 320, Taoyuan Shien (TW); Gan, Hongjian, 320, Taoyuan Shien (TW)
(74) Representative: Karl, Frank

(57) **Abstract**

The proposed architecture includes a Dual Boost PFC circuit (10) for receiving the AC input voltage and generating the DC bus voltage, at least one inverter (30₁, 30₂, 30₃, ..., 30ₙ) coupled to the Dual Boost PFC circuit (10) for driving at least one CCFL to offer a backlight of a LCD panel, and a DC/DC converter (20) coupled to the Dual Boost PFC circuit (10) for offering power to the LCD apparatus. Since neither the input bridge rectifier nor the DC/DC converter between the PFC circuit (10) and the backlight inverter (30₁, 30₂, 30₃, ..., 30ₙ) is included in the presented architecture, relatively the simpler configuration and the higher conversion efficiency than those of the prior art are achieved.

## Description

### FIELD OF THE INVENTION

The present invention relates to the power supply system for offering a backlight power of an apparatus. More specifically, this invention relates to the power supply systems of the apparatuses having the LCD backlight such as the LCD TV, the LCD device, and any other apparatuses having the cold cathode fluorescent light (CCFL) as the backlight.

### BACKGROUND OF THE INVENTION

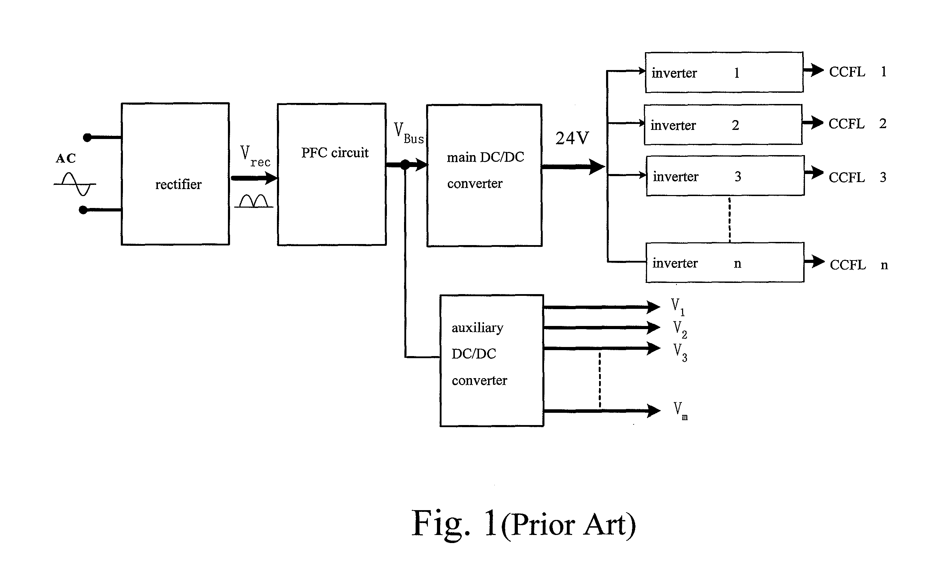

Regarding the prior art of the present invention, please refer to Fig. 1. In which, the AC voltage having the power-frequency that comes from the commercial power is sent to the rectifier firstly. The rectified DC output voltage of the rectifier is input to the power factor correction (PFC) circuit secondly. The output high voltage of the PFC circuit is the DC bus voltage and is sent to the main DC/DC converter for offering a 24 volts DC output voltage desired by a plurality of inverters each for driving a CCFL and to the auxiliary DC/DC converter for offering a plurality of output voltages desired by the control components of the LCD apparatus respectively. The output voltages of the inverters are a plurality of high voltages in the range of several hundred volts to more than a thousand volts converted from the input DC voltage of 24 volts. The main DC/DC converter is also functioned as a safety isolation device between the backlight inverters and the input AC line. There are other similar technologies in the prior art. For example, a circuit for offering the power of a CCFL could include a bridge rectifier, a PFC circuit (or a boost circuit) coupled to the bridge rectifier, and an inverter coupled to the PFC circuit. The power supply system having a relatively higher conversion efficiency and having a relatively more uniform distribution of the losses regarding all of the components of the power supply system is required by the working conditions of the self-cooling of the LCD panel. The relatively lower efficiencies of the PFC circuits with the power frequency rectifiers and the hot spots caused by their components in the above-mentioned technologies of the prior art are the problems relatively hard to overcome especially for the application occasions having the higher power. Besides, the 3 stage power conversion, including the PFC circuit, the main DC/DC converter and the CCFL backlight inverter will obviously cause the efficiency of the whole power supply system of the LCD apparatus to decrease due to the power consumptions of the backlight CCFL will occupy most part of the power consumptions of the power supply system of the LCD apparatus (in general, 70% to 80% of the rated power in case of a LCD TV). Furthermore, the high frequency transformer and the power components of the output rectifier of the power supply system are easily to become the hot spots due to the main DC/DC converter is required to handle most part of the power and the outputs of the main DC/DC converter include relatively the lower voltages and the higher currents.

Keeping the drawbacks of the prior arts in mind, and employing experiments and research full-heartily and persistently, the applicants finally conceived a new architecture of power supply system for LCD apparatus. In which, the utility AC voltage is converted to the DC bus voltage of several hundred volts directly generated by the Dual Boost PFC circuit and the power factor correction functions of the input current is accomplished at the same time. Since a bridge rectifier is omitted, the proposed PFC circuit could have a relatively higher efficiency. Different from the conventional architectures having an input voltage of 24 volts for the backlight inverters, the backlight inverters of the proposed architecture of the power supply system each would have an input voltage of several hundred volts, which directly comes from the output voltage of the Dual Boost PFC circuit of the previous stage. Without the main DC/DC converter between the PFC circuit of the previous stage and the backlight inverters, a relatively simpler configuration and the lower manufacturing costs, the higher conversion efficiency, and the thermal design more suitable for the self-cooling working conditions could be achieved.

### SUMMARY OF THE INVENTION

It is therefore an object of the present invention to propose a new architecture of a power supply system for offering a backlight power of an apparatus. A Dual Boost PFC circuit is employed to convert the input AC voltage to a DC bus voltage and to accomplish the functions of the PFC of the input current, at least one inverter is electrically connected to the proposed Dual Boost PFC circuit for driving at least one CCFL to offer a backlight of a LCD panel, and a DC/DC converter is electrically connected to the proposed Dual Boost PFC circuit to offer the power to the LCD apparatus. In the present invention, there is neither an input bridge rectifier, nor a DC/DC converter between the PFC circuit and backlight inverter, and the conversion efficiency of the proposed architecture is relatively higher.

According to the first aspect of the present invention, the architecture of a power supply system for offering a backlight power of an apparatus includes: a PFC circuit for receiving an AC input voltage and offering a DC voltage, an inverter electrically connected to the PFC circuit for driving CCFL so as to offer a backlight source, and a converter having a plurality of output voltages and electrically connected to the PFC circuit for offering the plurality of output voltages to the apparatus.

Preferably, the PFC circuit is a Dual Boost PFC circuit and includes: a boost inductor having a first terminal electrically connected to a first input terminal of the Dual Boost PFC circuit for receiving the input voltage, a bridge structure including: a first bridge leg having a first upper leg, a first lower leg, and a first node, in which the first node is electrically connected to a second terminal of the boost inductor, the first upper leg, and the first lower leg, a second bridge leg having a second upper leg, a second lower leg, and a second node, in which the second leg is electrically connected to the first leg in parallel, and the second node is electrically connected to a second input terminal of the Dual Boost PFC circuit, the second upper leg, and the second lower leg, and an output capacitor electrically connected to the second leg in parallel for outputting the DC voltage.

Preferably, the first upper leg includes a first diode having an anode electrically connected to the first node and a cathode electrically connected to a first terminal of the output capacitor, the first lower leg includes a first switch having a first terminal electrically connected to the first node, a second terminal electrically connected to a second terminal of the output capacitor, and a control terminal, the second upper leg includes a second diode having an anode electrically connected to the second node and a cathode electrically connected to the first terminal of the output capacitor, and the second lower leg includes a second switch having a first terminal electrically connected to the second node, a second terminal electrically connected to the second terminal of the output capacitor, and a control terminal.

Preferably, the first and the second switches are power switch elements.

Preferably, the first and the second switches are MOSFETs, the first terminals of the first and the second switches are drains of the MOSFETs, the second terminals of the first and the second switches are sources of the MOSFETs, and the control terminals of the first and the second switches are gates of the MOSFETs.

Preferably, the first upper leg includes a first switch having a first terminal electrically connected to a first terminal of the output capacitor, a second terminal electrically connected to the first node, and a control terminal, the first lower leg includes a first diode having a cathode electrically connected to the first node and an anode electrically connected to a second terminal of the output capacitor, the second upper leg includes a second switch having a first terminal electrically connected to the first terminal of the output capacitor, a second terminal electrically connected to the second node, and a control terminal, and the second lower leg includes a second diode having a cathode electrically connected to the second node and an anode electrically connected to the second terminal of the output capacitor.

Preferably, the first upper leg includes a first switch having a first terminal electrically connected to a first terminal of the output capacitor, a second terminal electrically connected to the first node, and a control terminal, the first lower leg includes a second switch having a first terminal electrically connected to the first node, a second terminal electrically connected to a second terminal of the output capacitor, and a control terminal, the second upper leg includes a first diode having an anode electrically connected to the second node and a cathode electrically connected to the first terminal of the output capacitor, and the second lower leg includes a second diode having a cathode electrically connected to the second node and an anode electrically connected to the second terminal of the output capacitor.

Preferably, the first upper leg includes a first diode having an anode electrically connected to the first node and a cathode electrically connected to a first terminal of the output capacitor, the first lower leg includes a second diode having a cathode electrically connected to the first node and an anode electrically connected to a second terminal of the output capacitor, the second upper leg includes a first switch having a first terminal electrically connected to the first terminal of the output capacitor, a second terminal electrically connected to the second node, and a control terminal, and the second lower leg includes a second switch having a first terminal electrically connected to the second node, a second terminal electrically connected to the second terminal of the output capacitor, and a control terminal.

Preferably, the architecture includes at least one inverter.

Preferably, the apparatus is an LCD apparatus.

Preferably, the converter is a DC/DC converter.

According to the second aspect of the present invention, the architecture of a power supply system for offering a backlight power of an apparatus includes: a PFC circuit for receiving an AC input voltage and offering a DC voltage, an inverter electrically connected to the PFC circuit for driving a light source so as to offer a backlight, and a converter having a plurality of output voltages and electrically connected to the PFC circuit for offering the plurality of output voltages to the apparatus.

The present invention may best be understood through the following descriptions with reference to the accompanying drawings, in which:

### BRIEF DESCRIPTION OF THE DRAWINGS

Fig. 1 is the block diagram of the conventional power supply system of the LCD apparatus in the prior art;
Fig. 2 is the schematic circuit diagram of the first preferred embodiment of the power supply system architecture of the LCD apparatus of the present invention;
Fig. 3 is the equivalent circuit diagram of the first preferred embodiment of the Dual Boost PFC circuit of the power supply system architecture of the LCD apparatus of the present invention;
Fig. 4 is the basic operational principles of the Dual Boost PFC circuit as shown in Fig. 3 of the present invention;
Fig. 5 is the schematic circuit diagram of the second preferred embodiment of the power supply system architecture of the LCD apparatus of the present invention;
Fig. 6 is the schematic circuit diagram of the third preferred embodiment of the power supply system architecture of the LCD apparatus of the present invention; and
Fig. 7 is the schematic circuit diagram of the fourth preferred embodiment of the power supply system architecture of the LCD apparatus of the present invention.

### DETAILED DESCRIPTION OF THE PREFERRED EMBODIMENT

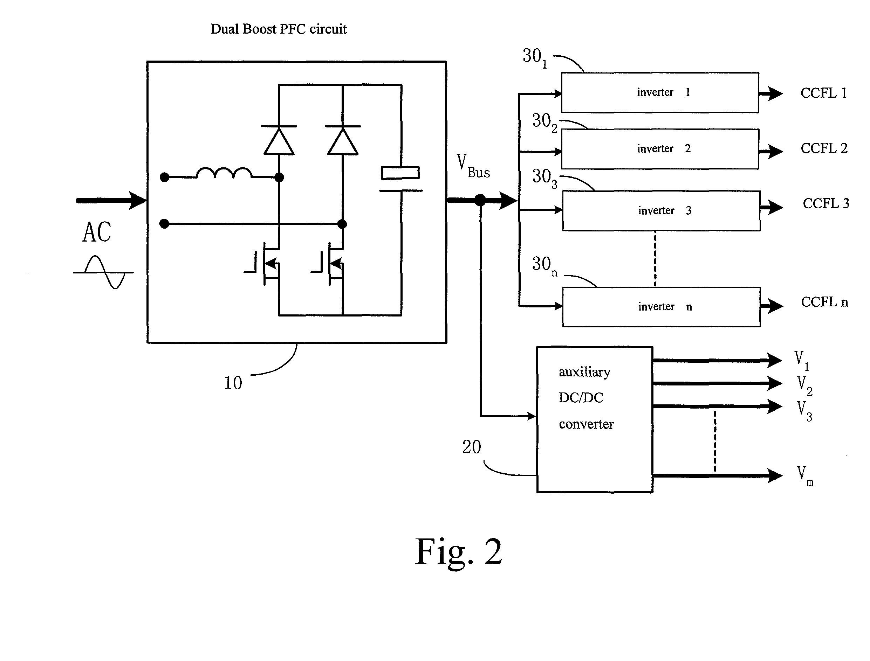

Please refer to Fig. 2, it shows the schematic circuit diagram of the first preferred embodiment of the power supply system architecture of the LCD apparatus of the present invention. In which, the input terminals of a Dual Boost PFC circuit 10 of the front stage are directly connected to the utility AC power network, the input utility AC voltage is converted to a stable DC bus voltage V_{BUS}. A plurality of inverters, 30₁, 30₂, ..., and 30ₙ, for driving corresponding CCFLs, CCFL₁, CCFL₂, ..., and CCFLₙ, to offer the backlight of the LCD panel. The input terminals of these inverters, 30₁, 30₂, ..., and 30ₙ, are electrically connected to the output terminals of the Dual Boost PFC circuit 10, and the input voltage for each of these inverters, 30₁, 30₂, ..., and 30ₙ, is the output voltage of the Dual Boost PFC circuit 10, V_{BUS}. The input terminals of a DC/DC converter 20 are also electrically connected to the output terminals of the Dual Boost PFC circuit 10 for generating a plurality of output voltages, V₁, V₂, ..., and Vₘ, desired by the control components of the LCD apparatus. Since the rectifier at the input side and the DC/DC converter between the PFC circuit and the backlight inverter of the conventional architecture as shown in Fig. 1 are both omitted in the proposed new architecture, the power consumptions of the LCD apparatus of the present invention are less than those of the conventional architecture, and the conversion efficiency of the proposed architecture is relatively higher, which is more suitable for the self-cooling working conditions. Meanwhile, relatively the simpler configuration and the lower manufacturing costs are also achieved by the proposed architecture.

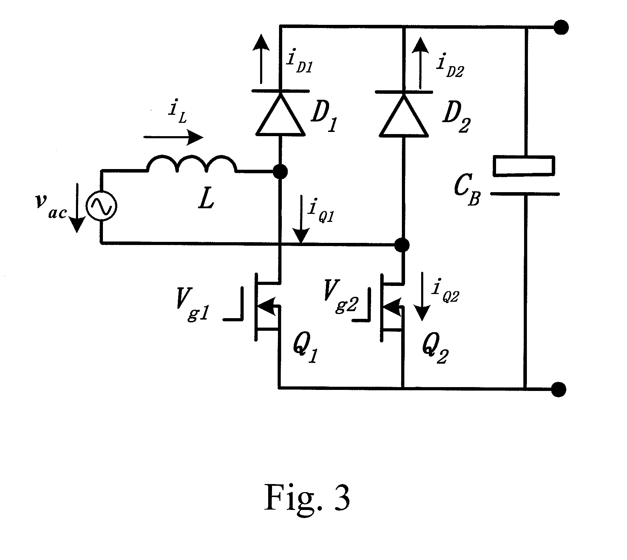

Please refer to Fig. 3, it shows the equivalent circuit diagram of the first preferred embodiment of the Dual Boost PFC circuit of the power supply system architecture of the LCD apparatus of the present invention. In which, the first diode D₁ and the first power switch Q₁ (a MOSFET) is electrically connected in series at the first connecting node, the second diode D₂ and the second power switch Q₂ (also a MOSFET) is electrically connected in series at the second connecting node, and these two series-connected combinations constitute two bridge legs electrically connected in parallel. The cathode of the first diode D₁ included in the first upper leg and the cathode of the second diode D₂ included in the second upper leg are electrically connected, and are electrically connected to the first terminal (the anode) of the output capacitor C_{B}. The source of the first switch Q₁ included in the first lower leg and the source of the second switch Q₂ included in the second lower leg are electrically connected, and are electrically connected to the second terminal (the cathode) of the output capacitor C_{B}. The AC input voltage having low frequency, V_{ac}, is electrically connected to a boost inductor L in series, and the series-connected combination of the boost inductor and the AC input voltage, V_{ac}, is electrically connected across the first and the second connecting nodes of the first and the second bridgelegs respectively.

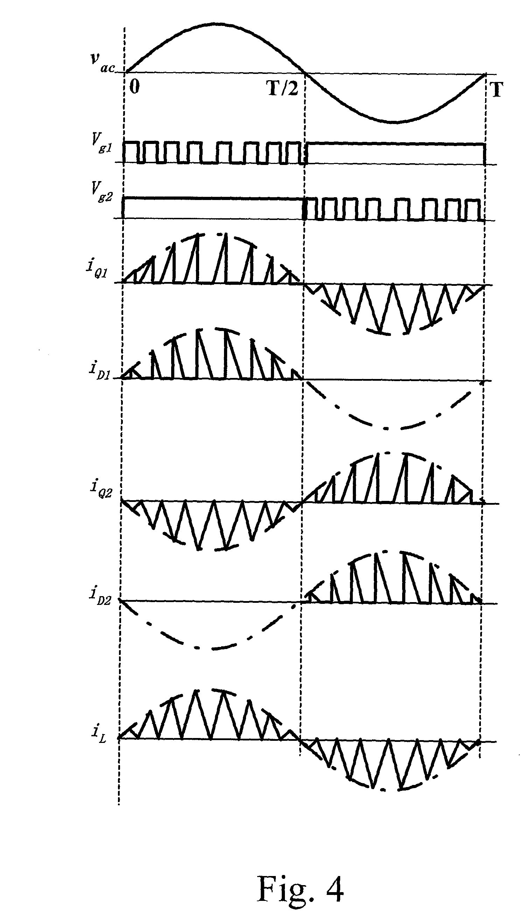

Please refer to Fig. 4, it shows the operational principles of the equivalent circuit diagram of the Dual Boost PFC circuit as shown in Fig. 3. According to the reference directions of the variables defined in Fig. 3, the boost inductor L, the first switch Q₁, the first diode D₁, and the output capacitor C_{B} constitute a basic boost PFC circuit in the positive half cycle of the input voltage V_{ac}, the second switch Q₂ is kept in the turned on status, and the current flows through the second switch Q₂ having the same amount of current that flows through the boost inductor L but in the reverse direction. The boost inductor L, the second switch Q₂, the second diode D₂, and the output capacitor C_{B} constitute a basic boost PFC circuit in the negative half cycle of the input voltage V_{ac}, the first switch Q₁ is kept in the turned on status, and the current flows through the first switch Q₁ having the same amount of current that flows through the boost inductor L but in the reverse direction. This circuit could be employed to fulfill the PFC functions by two boost PFC circuits at the positive and the negative half cycles respectively, thus a power frequency rectifier is not required.

Though it shows the case of the Dual Boost PFC circuit operated in DCM boundary as shown in Fig. 4, however, it should be pointed out that the control methods of which in the real applications are not limited to that only.

Besides, the first and the second switches Q₁ and Q₂ are not only restricted to the MOSFETs, they could be other power switch elements too.

Furthermore, the preferred embodiments of the Dual Boost PFC circuit as shown in Fig. 2 are not limited to the accomplishment of Fig. 3. Actually, if there are two diodes and two power switch elements to constitute a bridge structure similar to that of Fig. 3, and assuming that certain control method is employed, the AC/DC conversion and the PFC functions could be accomplished simultaneously.

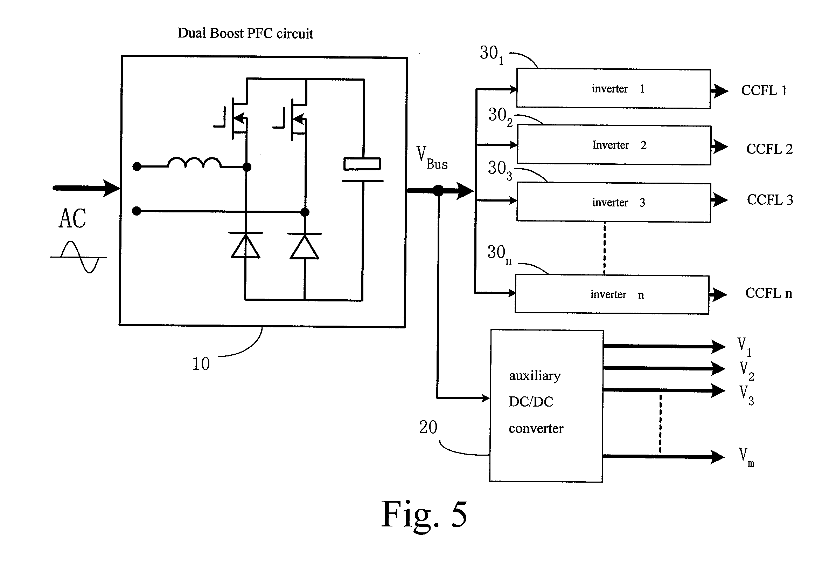

Fig. 5 is the schematic circuit diagram of the second preferred embodiment of the present invention. In which, the two power switch elements of the Dual Boost PFC circuit 10 constitute the two upper legs of the two bridge legs electrically connected in parallel, and the two diodes constitute the second lower bridge leg.

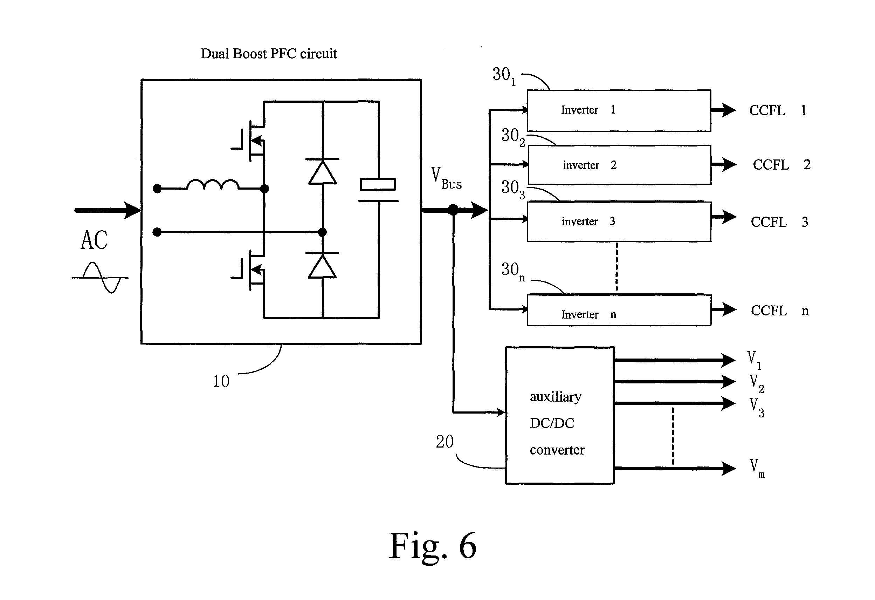

Fig. 6 is the schematic circuit diagram of the third preferred embodiment of the present invention. In which, the two power switch elements of the Dual Boost PFC circuit 10 constitute the first bridge leg of the two bridge legs electrically connected in parallel, and the two diodes constitute the second bridge leg.

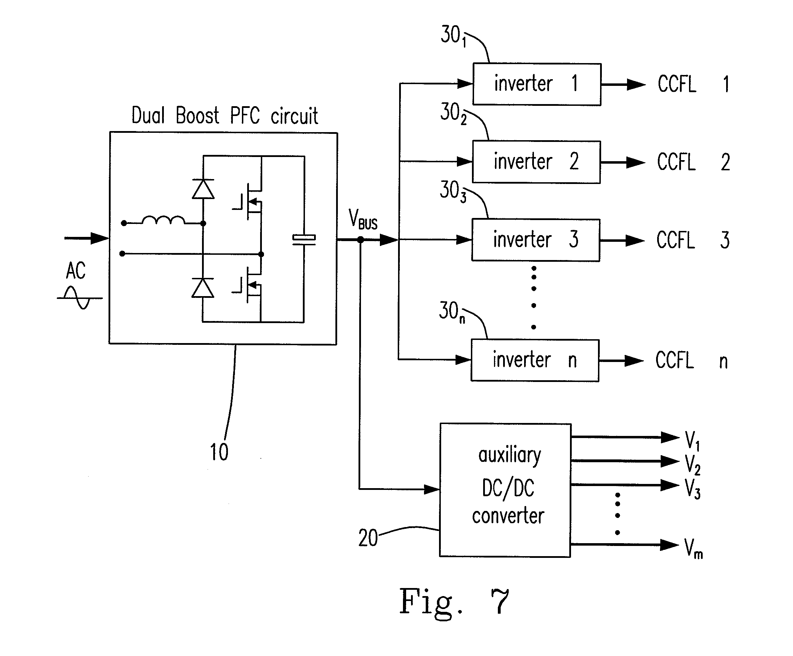

Fig. 7 is the schematic circuit diagram of the fourth preferred embodiment of the present invention. In which, the two diodes of the Dual Boost PFC circuit 10 constitute the first bridge leg of the two bridge legs electrically connected in parallel, and the two power switch elements constitute the second bridge leg.

In conclusion, the architecture of the power supply system disclosed in the present invention, which has neither the input rectifier nor the DC/DC converter between the PFC circuit and the backlight inverters of the prior art disclosed in Fig. 1. Likewise, the proposed circuit does not have any bridge rectifier of the aforementioned circuit for offering the power to CCFL in the prior art, which includes a bridge rectifier, a PFC circuit (or a boost circuit) coupled to the rectifier, and an inverter coupled to the PFC circuit, and the problem of having relatively lower efficiencies of the PFC circuits in the prior art is solved effectively. Therefore, relatively the simpler configuration and the lower manufacturing costs, the higher conversion efficiency, and the thermal design more suitable for the self-cooling working conditions than those in the prior art could be achieved by the proposed architecture of the present invention.

## Claims

1. An architecture of a power supply system for offering a backlight power of an apparatus, comprising:
a PFC circuit (10) for receiving an AC input voltage and offering a DC voltage;
an inverter (30₁, 30₂, 30₃, ..., 30ₙ) electrically connected to said PFC circuit (10) for driving a CCFL so as to offer a backlight source; and
a converter (20) having a plurality of output voltages and electrically connected to said PFC circuit (10) for offering said plurality of output voltages to said apparatus.

2. The architecture according to claim 1, wherein said PFC circuit (10) is a Dual Boost PFC circuit (10) and comprises:
a boost inductor having a first terminal electrically connected to a first input terminal of said Dual Boost PFC circuit (10) for receiving said input voltage;
a bridge structure, comprising:
a first bridge leg having a first upper leg, a first lower leg, and a first node, wherein said first node is electrically connected to a second terminal of said boost inductor, said first upper leg, and said first lower leg;
a second bridge leg having a second upper leg, a second lower leg, and a second node, wherein said second bridge leg is electrically connected to said first bridge leg in parallel, and said second node is electrically connected to a second input terminal of said Dual Boost PFC circuit (10), said second upper leg, and said second lower leg; and
an output capacitor electrically connected to said second bridge leg in parallel for outputting said DC voltage.

3. The architecture according to claim 2, wherein said first upper leg comprises a first diode having an anode electrically connected to said first node and a cathode electrically connected to a first terminal of said output capacitor, said first lower leg comprises a first switch having a first terminal electrically connected to said first node, a second terminal electrically connected to a second terminal of said output capacitor, and a control terminal, said second upper leg comprises a second diode having an anode electrically connected to said second node and a cathode electrically connected to said first terminal of said output capacitor, and said second lower leg comprises a second switch having a first terminal electrically connected to said second node, a second terminal electrically connected to said second terminal of said output capacitor, and a control terminal.

4. The architecture according to claim 3, wherein said first and said second switches are power switch elements.

5. The architecture according to claim 3, wherein said first and said second switches are MOSFETs, said first terminals of said first and said second switches are drains of said MOSFETs, said second terminals of said first and said second switches are sources of said MOSFETs, and said control terminals of said first and said second switches are gates of said MOSFETs.

6. The architecture according to claim 2, wherein said first upper leg comprises a first switch having a first terminal electrically connected to a first terminal of said output capacitor, a second terminal electrically connected to said first node, and a control terminal, said first lower leg comprises a first diode having a cathode electrically connected to said first node and an anode electrically connected to a second terminal of said output capacitor, said second upper leg comprises a second switch having a first terminal electrically connected to said first terminal of said output capacitor, a second terminal electrically connected to said second node, and a control terminal, and said second lower leg comprises a second diode having a cathode electrically connected to said second node and an anode electrically connected to said second terminal of said output capacitor.

7. The architecture according to claim 2, wherein said first upper leg comprises a first switch having a first terminal electrically connected to a first terminal of said output capacitor, a second terminal electrically connected to said first node, and a control terminal, said first lower leg comprises a second switch having a first terminal electrically connected to said first node, a second terminal electrically connected to a second terminal of said output capacitor, and a control terminal, said second upper leg comprises a first diode having an anode electrically connected to said second node and a cathode electrically connected to said first terminal of said output capacitor, and said second lower leg comprises a second diode having a cathode electrically connected to said second node and an anode electrically connected to said second terminal of said output capacitor.

8. The architecture according to claim 2, wherein said first upper leg comprises a first diode having an anode electrically connected to said first node and a cathode electrically connected to a first terminal of said output capacitor, said first lower leg comprises a second diode having a cathode electrically connected to said first node and an anode electrically connected to a second terminal of said output capacitor, said second upper leg comprises a first switch having a first terminal electrically connected to said first terminal of said output capacitor, a second terminal electrically connected to said second node, and a control terminal, and said second lower leg comprises a second switch having a first terminal electrically connected to said second node, a second terminal electrically connected to said second terminal of said output capacitor, and a control terminal.

9. The architecture according to claim 2, comprising at least one said inverter (30₁, 30₂, 30₃, ..., 30ₙ).

10. The architecture according to claim 1, wherein said apparatus is an LCD apparatus.

11. The architecture according to claim 1, wherein said converter (20) is a DC/DC converter (20).

12. An architecture of a power supply system for offering a backlight power of an apparatus, comprising:
a Dual Boost PFC circuit (10) for receiving an AC input voltage and offering a DC voltage;
an inverter (30₁, 30₂, 30₃, ..., 30ₙ) electrically connected to said PFC circuit (10) for driving a light source so as to offer a backlight; and
a converter (20) having a plurality of output voltages and electrically connected to said PFC circuit (10) for offering said plurality of output voltages to said apparatus.
